# EUROPEAN PATENT APPLICATION

(11) **EP 4 811 219 A1**
(43) Date of publication of application: **23.09.2026**
(21) Application number: 26161515.7
(22) Date of filing: 02.03.2026
(51) Int. Cl.: G06N 3/098, G06N 3/084, G06N 3/092, G06N 3/096, G06N 20/20, B60W 50/00

(54) **INCREMENTAL LEARNING METHODS, ELECTRONIC DEVICES, VEHICLES, AND PRODUCTS FOR ARTIFICIAL INTELLIGENCE MODELS**

(30) Priority: 05.03.2025 CN 202510258171
(71) Applicant: Robert Bosch GmbH, 70442 Stuttgart (DE)
(72) Inventor: DU, Yifan, Shanghai, 200335 (CN); LI, Nan, Shanghai, 200335 (CN); LI, Shuo, Shanghai, 200335 (CN)

(57) **Abstract**

The present disclosure relates to incremental learning methods, electronic devices, vehicles, and program products for vehicle artificial intelligence (Al) models. The method comprises acquiring a training sample, wherein the training sample is generated based on user feedback data from the vehicle itself indicating the user's driving feedback. The method further comprises updating the AI model of the vehicle through incremental learning based on the training sample. Furthermore, the method further comprises uploading the AI model updated through incremental learning to a cloud-based server to generate an aggregated AI model, wherein the aggregated AI model can be used for vehicle driving. Through this method, the personalization and generalization of the onboard AI models are realized, thereby greatly improving the user's AI driving experience.

## Description

### Technical Field

The present disclosure relates to the field of automotive technology, and more particularly, to incremental learning methods, electronic devices, vehicles, and program products for vehicle artificial intelligence models.

### Background Art

The Advanced Driver Assistance System (ADAS) based on artificial intelligence (AI) is an active safety technology that uses various sensors installed in the vehicle, such as cameras, radar, lasers, and ultrasonic sensors, to collect data on the internal and external environment of the vehicle. This allows for the identification, detection, and tracking of static and dynamic objects, thereby helping users to be aware of potential dangers in advance and improving driving safety and comfort.

The ADAS implements advanced Al algorithms within the vehicle to support a variety of safety and driver assistance functions. These systems utilize a variety of sensors (including cameras, radars, or LiDAR (Light Detection and Ranging, onboard LiDAR)) to continuously monitor the environment surrounding the vehicle and to detect potential hazards such as pedestrians, vehicles, or obstacles. Al algorithms analyze sensor data in real time to make critical decisions such as adaptive cruise control, lane keep assistance, automatic emergency braking, and collision avoidance. By incorporating Al into the vehicle's onboard systems, these ADAS functions are designed to improve safety, enhance driver assistance, and reduce the risk of road accidents.

### Summary of the Invention

In a first aspect of the examples of the present disclosure, an incremental learning method for a vehicle artificial intelligence (AI) model is provided. The method comprises acquiring a training sample, wherein the training sample is generated based on user feedback data from the vehicle itself indicating the user's driving feedback. The method further comprises updating the AI model of the vehicle through incremental learning based on the training sample. Furthermore, the method further comprises uploading the Al model updated through incremental learning to a cloud-based server to generate an aggregated AI model, wherein the aggregated AI model can be used for vehicle driving.

In a second aspect of the examples of the present disclosure, an electronic device is provided for incremental learning
of the vehicle artificial intelligence (AI) model. The electronic device comprises a processor and a memory coupled to the processor. The memory has instructions stored therein that cause the processor to execute the incremental learning method for the artificial intelligence (AI) model of the vehicle. The method comprises acquiring a training sample, wherein the training sample is generated based on user feedback data from the vehicle itself indicating the user's driving feedback. The method further comprises updating the Al model of the vehicle through incremental learning based on the training sample. Furthermore, the method further comprises uploading the AI model updated through incremental learning to a cloud-based server to generate an aggregated AI model, wherein the aggregated Al model can be used for vehicle driving.

In a third aspect of the examples of the present disclosure, a computer program product is provided. The computer program product is tangibly stored on a non-transitory computer readable medium and comprises machine executable instructions that, when executed, cause a machine to implement an incremental learning method for an artificial intelligence (AI) model for a vehicle as provided in the present disclosure. The method comprises acquiring a training sample, wherein the training sample is generated based on user feedback data from the vehicle itself indicating the user's driving feedback. The method further comprises updating the AI model of the vehicle through incremental learning based on the training sample. Furthermore, the method further comprises uploading the Al model updated through incremental learning to a cloud-based server to generate an aggregated AI model, wherein the aggregated AI model can be used for vehicle driving.

In a fourth aspect of the examples of the present disclosure, a computer-readable storage medium is provided, wherein machine-executable instructions are stored on the computer-readable medium, which, when executed, cause a machine to implement the incremental learning method for an artificial intelligence Al model for a vehicle provided in this disclosure. The method comprises acquiring a training sample, wherein the training sample is generated based on user feedback data from the vehicle itself indicating the user's driving feedback. The method further comprises updating the Al model of the vehicle through incremental learning based on the training sample. Furthermore, the method further comprises uploading the AI model updated through incremental learning to a cloud-based server to generate an aggregated Al model, wherein the aggregated Al model can be used for vehicle driving.

In a fifth aspect of the examples of the present disclosure, an Al model aggregation method for vehicle driving is provided. The method comprises acquiring a plurality of AI models from a plurality of vehicles, wherein the Al models are Al models updated through incremental learning. The method further comprises aggregating a plurality of incrementally learned Al models based on an Al model aggregation algorithm and generating an aggregated AI model. Furthermore, the method further comprises distributing the aggregated Al model to at least one vehicle.

In a sixth aspect of the examples of the present disclosure, an Al model aggregation electronic device for vehicle driving is provided. The electronic device comprises a processor and a memory coupled to the processor. The memory has instructions stored therein that cause the processor to execute a method for vehicle driving. The method comprises acquiring a plurality of AI models from a plurality vehicles, wherein the Al models can be updated through incremental learning. The method further comprises aggregating a plurality of AI models based on an Al model aggregation algorithm and generating an aggregated AI model. Furthermore, the method further comprises distributing the aggregated Al model to at least one vehicle.

It should be understood that the content described in the Summary of the Invention section is not intended to define the key or essential features of the embodiments of the present disclosure, nor is it intended to limit the scope of the present disclosure. Other features of the present disclosure will become readily understood by the following description.

### Description of Attached Drawings

Above and other features, advantages and aspects of various examples of the present disclosure will become more apparent in combination with the accompanying drawings and with reference to the following detailed description. In the accompanying drawings, like or similar reference signs designate like or similar elements, wherein:
FIG. 1 shows an application environment for a reinforcement learning method for a vehicle AI model that can be used in one or more examples of the present disclosure;
FIG. 2 shows a flowchart of a reinforcement learning method for a vehicle AI model according to some examples of the present disclosure;
FIG. 3 shows a flowchart of a method for generating user feedback data according to some examples of the present disclosure;
FIG. 4 shows a flowchart of a method for deploying an initial Al model in a vehicle according to some examples of the present disclosure;
FIG. 5 shows a flowchart of a method for deploying an aggregated Al model in a vehicle according to some examples of the present disclosure;
FIG. 6 shows a flowchart of an AI model aggregation method for vehicle driving according to some examples of the present disclosure;
FIG. 7 shows a block diagram of a system for the personalization and generalization of an AI model for vehicle driving according to some examples of the present disclosure;
FIG. 8 shows a logical architecture block diagram of a system for the personalization and generalization of an AI model for vehicle driving according to some examples of the present disclosure
FIG. 9 shows a block diagram of an electronic device that can implement a plurality of examples of the present disclosure.

### Detailed Description of the Embodiments

The examples of the present disclosure will be described in further detail below with reference to the accompanying drawings. Although certain examples of the present disclosure are shown in the accompanying drawings, it should be understood that the present disclosure may be implemented in various forms and should not be construed as being limited to the examples set forth herein, rather these examples are provided for a more thorough and complete understanding of the present disclosure. It will be understood that the accompanying drawings and embodiments of the present disclosure are for exemplary purposes only and are not intended to limit the scope of protection of the present disclosure, and the embodiments of the present disclosure that are described below with reference to the accompanying drawings are for illustrative purposes only.

As noted above, AI-based ADAS are being used more and more widely. On the other hand, connected car clouds have also been widely adopted. The connected car cloud comprises cloud-based infrastructure specifically designed to support connected cars and related services. This technology involves establishing a network connection between vehicles and cloud servers for seamless communication and data exchange. The cloud platform provides centralized storage, processing, and analytics for the large amounts of data generated by connected vehicles (including sensor data, telemetry information, and diagnostic data). By leveraging cloud computing resources, connected vehicles can acquire real-time updates, receive navigation assistance, and benefit from predictive maintenance services. In addition, the cloud facilitates communication and data sharing between vehicles, enabling collaborative functions such as traffic optimization, collaborative perception, and collective learning among vehicles on the road.

Related AI driving solutions are concentrated on independent Al vehicles, lacking adaptability to personalize driver assistance functions according to individual user preferences and different driving environments. This limitation hinders the optimization of the driving experience and the efficient use of AI functionality in the ADAS.

One or more examples of the present disclosure create a crowdsourcing approach for use in the field of intelligent driving of vehicles. In the field of artificial intelligence, crowdsourcing refers to a method of distributing artificial intelligence-related tasks (such as data labeling, model training and optimization) to a large number of non-specific targets (crowdsourcing workers, such as terminals, servers,
vehicles, etc.) through an Internet platform. One or more examples of the present disclosure actively utilize user driving feedback data to update and personalize the Al model in each vehicle by aggregating and integrating an onboard incremental learning Al model with a cloud-based Al model, and then also contributing to generalization for all users.

One or more examples of the present disclosure comprise an onboard incremental learning model for ADAS functions to provide a personalized experience. Additionally, one or more examples of the present disclosure further comprise cloud aggregation for improving models and updating all vehicles to provide a better experience. One or more examples of the present disclosure comprise the innovative integration of incremental learning into the ADAS, continually improving driver assistance. Unlike traditional static Al models, one or more examples of the present disclosure comprise dynamically adapting to user feedback and driving conditions to improve safety and user experience. One or more examples of the present disclosure comprise utilizing crowdsourced and federated learning comprising ADAS functions such as automatic emergency braking (AEB), adaptive cruise control (ACC), and automated valet parking (AVP) to improve safety and convenience. Federated learning is an existing machine learning framework designed to enable data sharing and model training among a plurality of participants (e.g., a plurality of devices, a plurality of vehicles, etc.) while protecting data privacy and security. Seamlessly integrating these with onboard Al and cloud-based processing ensures a comprehensive solution while protecting user privacy.

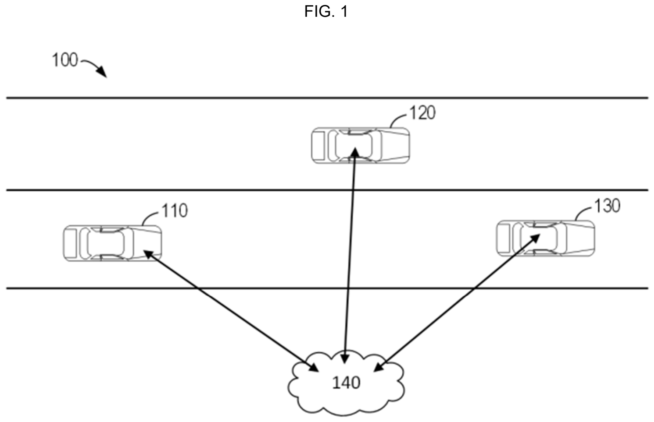

FIG. 1 shows an application environment 100 for a reinforcement learning method for a vehicle AI model that can be used in one or more examples of the present disclosure. In FIG. 1, the vehicles 110, 120, and 130 can communicate and exchange information with the connected car cloud 140 via their onboard Al-based ADAS. Optionally, the vehicles 110, 120, and 130 can achieve seamless communication and data exchange with the connected car cloud 140. The connected car cloud 140 can provide centralized storage, processing, and analysis capabilities for the large amounts of data (including sensor data, telemetry information, and diagnostic data) generated by the connected vehicles 110, 120, and 130. By leveraging the cloud computing resources of the connected car cloud 140, the connected vehicles 110, 120, and 130 can acquire real-time updates, receive navigation assistance, and benefit from predictive maintenance services. In addition, the connected car cloud 140 can facilitate communication and data sharing between the connected vehicles 110, 120, and 130, thereby enabling collaborative functions such as traffic optimization, collaborative perception, and collective learning among vehicles on the road. Notably, FIG. 1 is merely an illustrative example, intended only to make this disclosure easier to understand, and is not intended to limit one or more examples of the present disclosure, nor to limit the scope of protection of the present disclosure. One skilled in the art may use one or more examples of the present disclosure in any applicable application environment. Furthermore, any application environment suitable for the present disclosure is within the scope of protection of the present disclosure.

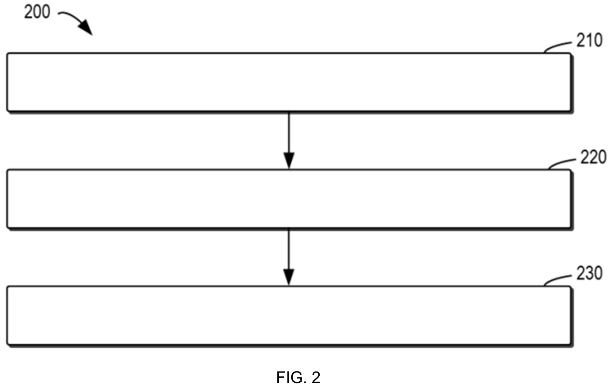

FIG. 2 shows a flowchart of a reinforcement learning method 200 for a vehicle AI model according to some examples of the present disclosure. Optionally, the method 200 may be performed by the vehicles 110, 120, or 130 as shown in FIG. 1. At block 210, the method comprises acquiring a training sample, wherein the training sample is generated based on user feedback data from the vehicle itself indicating the user's driving feedback. Optionally, the training sample is generated based on the vehicle's own user feedback data, which indicates the user's driving feedback and contains personalized information, such as the user's preferences regarding the vehicle's driving conditions, their own comfort level, or the overall driving experience. Optionally, user feedback data can be acquired by having the user actively input relevant feedback data. For example, the user can make initial settings for the Al model, directly setting their preferences for vehicle driving conditions, personal comfort, or overall driving experience. Optionally, at least one of the vehicle's state information and the surrounding environmental information while the user is driving can also be used as the user feedback data, since at least one of the state information and the information of the vehicle's surrounding environment while the user is driving indirectly reflects the user's preferences. Furthermore, the training sample generated based on user feedback data can directly comprise at least one of the vehicle's state information and information of the vehicle's surrounding environment when the user takes over driving. The vehicle's state information when the user takes over driving can include vehicle speed, vehicle acceleration and deceleration, vehicle pitch and bump conditions, pedal pressure and urgency, power consumption or fuel consumption, etc., while the information of vehicle's surrounding environment when the user is driving can comprise the driving conditions of surrounding vehicles, road conditions, weather conditions, traffic signs, etc. Optionally, the user feedback data can be preprocessed to generate sample data that can be used to train the Al model. Optionally, preprocessing comprises extracting feature values from user feedback data based on the Al model's requirements for sample data. Optionally, a corresponding Al model may be generated based on these feature values.

At block 220, the method further comprises updating the Al model of the vehicle through incremental learning based on the training sample. Optionally, the Al model may be updated through incremental learning. Optionally, since the AI model
is updated through incremental learning, it is beneficial to iteratively utilize user feedback data and continuously train the AI model on the vehicle locally based on the user feedback data, thereby making the AI model more suited to the user. In addition, since the training samples are generated based on the user's personalized feedback data, the trained Al model is closer to the user's preferences. This is more advantageous than traditional AI models in conventional vehicles and provides users with a better user experience and more personalized driving.

At block 230, the AI model updated through reinforcement learning is uploaded to a cloud-based server to generate an aggregated Al model. Optionally, the aggregated Al model is used to download the aggregated Al model through at least one vehicle for driving of at least one vehicle including the vehicles 110, 120, and/or 130 or other vehicles. Optionally, the cloud is a connected car cloud, and the aggregated Al model can be used for driving the vehicle by downloading the aggregated AI model to at least one vehicle for driving at least one vehicle, and the at least one vehicle comprises the vehicle or other vehicles that belong to the same connected car cloud as the vehicle. Optionally, the trained AI model may be uploaded to a cloud-based server. For example, the trained Al models of the vehicles 110, 120, and/or 130 of FIG. 1 may be uploaded to the connected car cloud 140. Optionally, the connected automotive cloud 140 may also proactively acquire the trained AI models from the vehicles 110, 120, and/or 130 upon acquiring the consent of the users of the vehicles 110, 120, and/or 130. Optionally, the connected car cloud 140 can aggregate the trained Al models from the various vehicles 110, 120, and/or 130 to form an aggregated AI model from the trained AI models from a plurality of vehicles. Optionally, the aggregated AI model can combine the advantages of the individual personalized AI models and smooth out some overly personalized parameters to acquire an aggregated AI model with better performance. Optionally, the connected car cloud 140 can subsequently distribute the aggregated Al model to each vehicle 110, 120, and/or 130 to update their original Al models. Optionally, the connected car cloud 140 can also pre-install the aggregated AI model as the initial Al model for other vehicles newly added to the connected car cloud 140. Optionally, uploading an Al model to a cloud-based server may comprises anonymizing the AI model, as well as uploading the anonymized AI model to the cloud-based server. Optionally, uploading the anonymized Al model to the cloud-based server comprises uploading model parameters such as model gradients and metadata of the anonymized Al model. By anonymizing the Al model, the privacy and personal data of the user can be protected, thereby safeguarding their privacy and personal data from being compromised.

As such, one or more examples of the method 200 address the limitation of existing vehicle AI systems lacking user feedback-based reinforcement, innovatively addressing the need for a user-centric approach and ensuring continuous and incremental learning of the AI model on the vehicle. This provides a better user experience. In addition, one or more examples of the method 200 utilize connected car cloud resources to aggregate insights, centrally improve the model, and integrate user-specific improvements to iteratively update the vehicle's AI model. This is achieved by utilizing a federated learning framework, which enables effective collaboration between onboard AI models, the cloud, and user feedback.

In summary, one or more examples of the method 200 innovatively introduce a personalized AI system that integrates the vehicle and the cloud based on Al-based ADAS and cloud-connected vehicle trends. The incremental Al model in the vehicle not only promotes personalized decision-making by actively participating in user feedback, but further involves cloud-based infrastructure for aggregation and continuous model updates, achieving significant technical results.

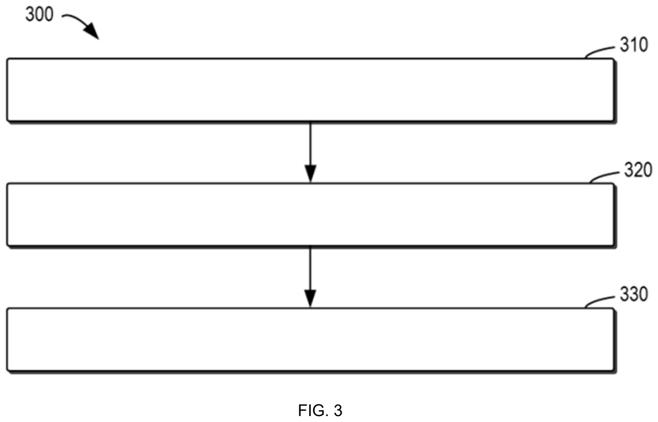

FIG. 3 shows a flowchart of a method 300 for generating user feedback data according to some examples of the present disclosure. At block 310, the user's driving actions are detected. Optionally, the user's driving action may still be detected during the ADAS assisted driving process. This ensures that the driving actions of interest to the method 300 can be detected. In general, a vehicle's onboard hardware system comprises sensors, processors, and actuators installed within the vehicle. Sensors collect data from the vehicle's surroundings, such as cameras, LiDAR, radar, and ultrasonic sensors. Processors analyze sensor data and execute decision-making algorithms. Actuators translates algorithmic decisions into physical actions, such as steering, braking, and acceleration. Optionally, the user's driving actions can be achieved through the steering wheel, pedals, or other operations, and the user's driving actions act on the vehicle through the vehicle's actuators. The vehicle's sensors and processors can therefore detect and collect data on the user's driving actions.

At block 320, in response to detecting the user's takeover driving action on the vehicle, the state information of the user's takeover driving action is acquired. Optionally, the method 300 focuses on user takeover events of the vehicle. Optionally, the method 300 focuses on user takeover events because when the user takes over from the ADAS assisted driving, this means the user may be dissatisfied with the ADAS
assisted driving state or that the state does not meet the user's preferences. Optionally, the takeover driving action is the user's decision based on at least one of their preferences regarding the vehicle's driving condition, their own comfort, or the overall driving experience. Optionally, the state information comprises the state information of the vehicle's driving action actuator and/or information of the vehicle's surrounding environment.

At block 330, the state information is used as user feedback data. Optionally, the user feedback data indicates the user's takeover driving feedback, which contains personalized information, such as the user's preferences regarding the vehicle's driving conditions, their own comfort level, or the overall driving experience. Optionally, the state information or the training sample generated based on the user feedback data can comprise at least one of the vehicle's state information and the information of the vehicle's surrounding environment when the user takes over driving. The vehicle's state information when the user takes over driving can include vehicle speed, vehicle acceleration and deceleration, vehicle pitch and bump conditions, pedal pressure and urgency, power consumption or fuel consumption, etc., while the information of the vehicle's surrounding environment when the user is taking over driving can include the driving conditions of surrounding vehicles, road conditions, weather conditions, traffic signs, etc. Optionally, the user feedback data can be preprocessed to generate sample data that can be used to train the Al model. Optionally, preprocessing comprises extracting feature values from user feedback data based on the Al model's requirements for sample data. Optionally, corresponding Al models for training may be generated based on these feature values. Optionally, the vehicle is equipped with Al model software. Optionally, the onboard Al model software manages real-time inference tasks, seamlessly integrating perception, planning, and control functions. The Al software is equipped with an incremental learning mechanism that dynamically generates new training samples based on the user takeover state. By mapping user takeover to the corresponding ground condition-based output of the Al model, the system continuously learns from user interactions, thereby improving performance over time.

Thus, based on one or more examples of the method 300, user feedback data containing personalized user information can be generated. The training samples generated based on the user feedback data can be used to train a personalized Al model, thereby realizing the personalization of the vehicle's Al model and greatly improving the user's driving experience.

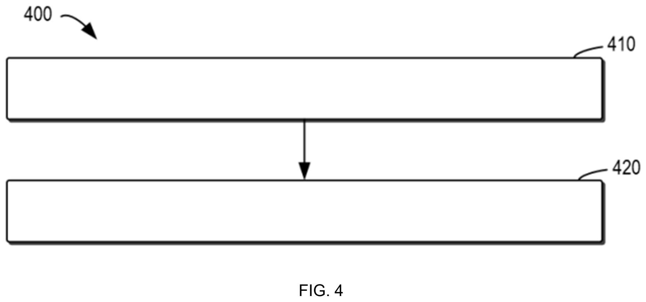

FIG. 4 shows a flowchart of a method 400 for deploying an initial Al model in a vehicle according to some examples of the present disclosure. At block 410, an initial incremental learning AI model is deployed in the vehicle. The AI model can be updated through incremental learning. Optionally, the initial incremental learning Al model already possesses basic modules or functions for driving the vehicle.

Optionally, the vehicle may proactively acquire an initial Al model from the connected car cloud that can be updated through incremental learning. Optionally, the connected car cloud may also actively deploy Al models to newly added vehicles with the consent of the user. At block 420, the Al model is initialized using basic parameters. Optionally, basic parameters can be acquired from the connected car cloud or proactively pushed by the connected car cloud. Optionally, the functions of blocks 410 and 420 may be combined into one, for example, to deploy an Al model that has already been initialized with basic parameters. Optionally, the initialized AI model is capable of generating a driving strategy for the vehicle based on state information features extracted from the state information.

In some examples, the method 400 may acquire state information of the vehicle and/or information of the vehicle's surrounding environment. In general, a vehicle's onboard hardware system comprises sensors, processors, and actuators installed within the vehicle. Sensors collect data from the vehicle's surroundings, such as cameras, LiDAR, radar, and ultrasonic sensors. Processors analyze sensor data and execute decision-making algorithms. Actuators translates algorithmic decisions into physical actions, such as steering, braking, and acceleration. Optionally, the state information of the vehicle and/or the information of the vehicle's surrounding environment may be detected, collected, and processed using vehicle sensors and processors.

In some examples, the method 400 may extract state information features based on the state information of the vehicle and/or information of the vehicle's surrounding environment. Optionally, the state information of the vehicle and/or information of the vehicle's surrounding environment is preprocessed to generate input data that may be used for the Al model. Optionally, preprocessing comprises extracting feature values of the vehicle's state information and/or information of the vehicle's surrounding environment according to the Al model's requirements for the input data. Different AI models have different requirements for input data and different desired feature values. It is therefore desirable to extract the corresponding feature values according to the corresponding Al model. Notably, one or more examples of the present disclosure do not define the manner in which the feature values are extracted or the specific content of the feature values. Those skilled in the art can extract appropriate feature values according to actual needs. Furthermore, any feature value extraction method or form suitable for the present disclosure falls within the protection scope of the present disclosure. In some examples, the AI model may generate a driving strategy for the vehicle based on state information features. Optionally, the extracted state information features can be used as input for an incremental learning Al model. Through the internal operation of this incremental learning Al model, a driving strategy can be generated for driving the vehicle.

As such, one or more examples of the method 400 provide the user with vehicle-friendly and environment-friendly driving strategies to assist the user in driving by deploying an Al model and detecting the driving condition and surrounding environment of the vehicle, thereby enabling the user to have a good driving experience.

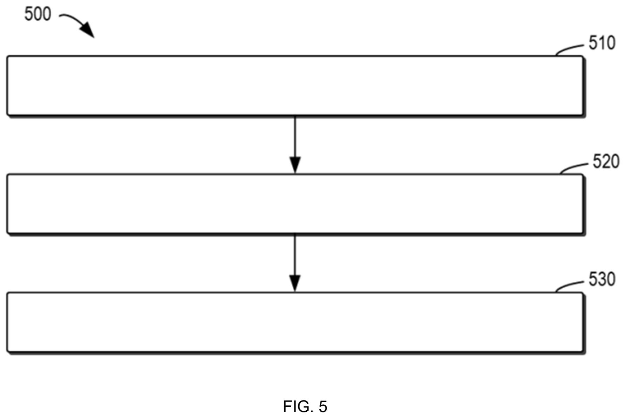

FIG. 5 shows a flowchart of a method 500 for deploying an aggregated Al model in a vehicle according to some examples of the present disclosure. At block 510, an aggregated AI model is acquired from a cloud-based server. Optionally, the vehicle may actively acquire the aggregated Al model from the connected car cloud. Optionally, the connected car cloud may also actively deploy the aggregated Al model to newly added vehicles with the consent of the user.

At block 520, the original AI model of the vehicle is replaced with the aggregated AI model. Optionally, the aggregated AI model is formed by aggregating the Al models of a plurality of vehicles. Optionally, the aggregation is based on at least one aggregation algorithm among random forest, model ensemble, or probabilistic ensemble. Optionally, the vehicle and the server communicate via cellular or 5G networks. The aggregated Al model replaces the vehicle's original AI model, including detecting the vehicle's driving state and, in response to the vehicle's driving state being in a long-term stationary state, replacing the vehicle's original AI model with the aggregated Al model. The reason for replacing the model when the vehicle is stationary for an extended period of time is to ensure the safety of the vehicle and the user, thereby avoiding replacement while the vehicle is in motion, as replacing the Al model while the vehicle is in motion could pose safety hazards. At block 530, a driving strategy is generated based on the aggregated Al model. Optionally, the aggregated AI model can combine the advantages of the individual personalized AI models and smooth out some overly personalized parameters to achieve better performance. Thus, using an aggregated AI model to generate driving strategies for the user will bring the user a better and more comprehensive driving experience.

As such, one or more examples of the method 500 innovatively introduce a personalized AI system that integrates the vehicle and the cloud based on Al-based ADAS and cloud-connected vehicle trends. The incremental AI model in the vehicle not only promotes personalized decision-making by actively participating in user feedback, but further involves cloud-based infrastructure for aggregation and continuous model updates, achieving significant technical results.

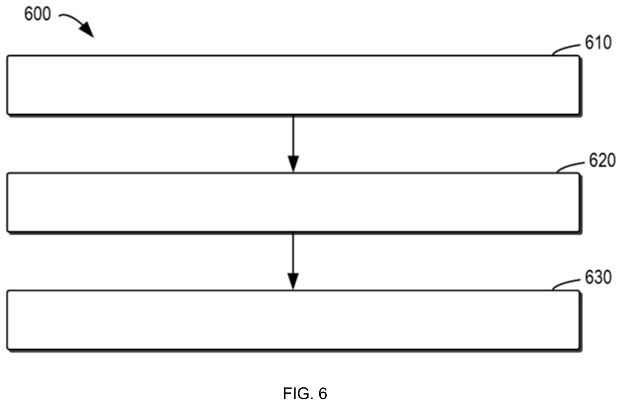

FIG. 6 shows a flowchart of an AI model aggregation method 600 for vehicle driving according to some examples of the present disclosure. Optionally, the method 600 may be performed by a related server in the connected car cloud. Optionally, the connected car cloud provides cloud infrastructure. The cloud infrastructure supports data storage, processing, and collaboration between vehicles and a central server, collecting and storing AI models from a plurality of vehicles for centralized analysis and aggregation. Cloud-based software refines models, generates insights, and distributes updates to vehicles, while vehicle AI models can be securely transferred to and downloaded from the cloud. At block 610, a plurality of AI models are acquired from a plurality of vehicles, wherein the Al models are Al models updated through incremental learning. Optionally, the Al models may be anonymized. Optionally, the Al model updated through incremental learning can be an AI model obtained according to one or more examples of the incremental learning method for a vehicle artificial intelligence (AI) model described above. Optionally, a plurality of vehicles can actively push their own trained AI models to the connected car cloud, or optionally, the connected car cloud can actively acquire the trained Al models from a plurality of vehicles upon acquiring the users' consent. Optionally, the AI model is an Al model that can be updated through incremental learning. To better protect user privacy and user data, Al models can be anonymized before uploading. Optionally, considering the vehicle's limited computing resources, anonymization can also be performed in the connected car cloud to protect user privacy and user data.

At block 620, a plurality of AI models are aggregated based on an AI model aggregation algorithm. Optionally, the AI model aggregation algorithm comprises at least one of random forest, model ensemble, or probabilistic ensemble. Furthermore, at block 620, the aggregated Al model is further generated. Additionally, at block 630, the aggregated AI model is distributed to at least one vehicle. Optionally, a plurality of vehicles may be able to actively acquire the aggregated AI model from the connected car cloud. Optionally, the aggregated AI model may also be actively pushed to a plurality of vehicles by the connected car cloud upon acquiring the consent of the vehicle users. Optionally, once the vehicle obtains the aggregated AI model, it is possible to replace the original Al model with the aggregated AI model when not driving, resulting in a better driving experience.

As such, one or more examples of the method 600 fully utilize connected car cloud resources to aggregate insights, centrally improve the model, and integrate user-specific improvements to iteratively update the vehicle's AI model. This is achieved by utilizing a federated learning framework, which enables effective collaboration between onboard AI models, the cloud, and user feedback. Another one or more examples of the method 600 fully leverage the trends of AI-powered ADAS and cloud-based connected cars, innovatively introducing a personalized AI system that integrates the vehicle with the cloud. Additionally, the Al model in the vehicle not only promotes personalized decision-making by actively participating in user feedback, but further involves cloud-based infrastructure for aggregation and continuous model updates, constantly improving the user's driving experience and achieving significant technical results.

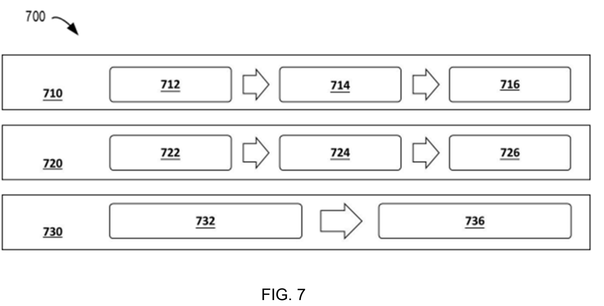

FIG. 7 shows a block diagram of a system 700 for the personalization and generalization of an AI model for vehicle driving according to some examples of the present disclosure. The system 700 comprises an inference module 710, a personalization module 720, and a generalization module 730. The inference module 710 operates primarily in conjunction with an onboard sensor system and an execution system based on the onboard Al model. The initial Al model is deployed on the vehicle and is initialized using basic parameters for inference in driving scenarios. The intelligent driving module 710 may comprise a sensor data processing module 712, an Al model inference module 714, and a planning and control module 716. At the sensor data processing module 712, sensors within the vehicle capture a variety of data points, including driving state, the environmental conditions around the vehicle, etc., and the data collected is preprocessed to extract relevant feature data to be prepared for input into the Al model. At the Al model inference module 714, the Al model performs real-time inference based on relevant feature data. During driving, the Al model makes driving decisions based on the current environmental conditions (such as speed, traffic conditions, and road layout). At the planning and control module 716, driving paths are planned based on driving decisions and the vehicle is controlled using the vehicle's actuators. For example, driving operations selected by the Al model will affect vehicle behavior, such as vehicle acceleration, braking, and steering.

The personalization module 720 is used to process user interactions, user takeover events, etc. The personalization module 720 may comprise a user takeover module 722 and a sample generation module 724. During the entire driving process, if the user is not satisfied with the driving of the AI model, the entire system will be taken over by the user at the user takeover module 722. The user can take over the vehicle through the steering wheel, pedals or other operations. For example, the user can take over according to their preferences for vehicle behavior, comfort and overall driving experience. The personalization module 720 processes user feedback at the sample generation module 724. User takeover can be mapped to the expected output on the actuators of a plurality of vehicles. User takeover indicates that the current output obtained from the vehicle AI is not ideal. This information can be converted into new training samples for the Al model. At the Al model update module 726, the personality generation module 720 continuously updates the onboard AI model by iteratively training the Al model based on new training samples generated from user feedback data. The personalization module 720 has the advantages of continuous learning and adaptation. The incremental Al model undergoes continuous learning and adaptation as the vehicle continues to collect data and receive new basic facts from user takeover. Over time, the model will become more personalized to suit the preferences and driving style of individual users, thereby enhancing the overall driving experience.

In addition, although not shown in the personalization module 720, optionally, the personalization module 720 may further comprise an incremental learning module that continuously adjusts the weights of the onboard model based on user feedback (e.g., coverage) and collected driving data. Online gradient descent or elastic weight consolidation can be used to ensure that the model is updated incrementally without requiring a complete retraining. Optionally, the personalization module 720 may further comprise a feedback interface for capturing user interactions (such as steering corrections) or implicit behaviors (such as frequent braking) and converting them into learning signals. The relevant weights in the neural network of the vehicle model are updated based solely on user feedback, enabling the system to personalize performance for individual drivers. Optionally, the personalization module 720 may also further comprise a metadata tracker that maintains metadata (such as model version, age, and accuracy metrics) to ensure that the correct updates are sent to the cloud.

The generalization module 730 may aggregate and distribute Al models based on the connected car cloud. The generalization module 730 may comprise an Al model aggregation module 732 and an Al model deployment module 736. At the Al model aggregation module 732, the vehicle periodically uploads anonymized AI models to a cloud-based server, and the generalization module 730 can aggregate these Al models. The generalization module 730 analyzes models from a plurality of vehicles to identify broader trends and patterns, further aggregating the Al models. The aggregated Al model is then distributed back to each vehicle at the AI model deployment module 736 to ensure that all vehicles benefit from the aggregated AI model. The aggregated Al model is deployed to vehicles, enhancing their inference capabilities and driving experience. This cycle repeats continuously, with the vehicle constantly collecting data, incorporating user takeover, and improving its Al model to deliver a personalized and adaptive driving experience.

In addition, although not shown in the generalization module 730, optionally, the generalization module 730 may further comprise a joint learning aggregator that collects model updates for all vehicles, and optionally applies a joint averaging method to generalize the driving scenario and reallocate the improved global model. Federated learning is an existing machine learning framework designed to enable data sharing and model training among a plurality of participants (e.g., a plurality of devices, a plurality of vehicles, etc.) while protecting data privacy and security. In addition, the joint averaging method in joint learning generally refers to averaging the model parameters of all participants. In some examples, it can be a simple arithmetic average, which is to add up the same parameter values of all participants and then divide by the number of participants to obtain the averaged model parameters. To save space in the present disclosure, further details will not be elaborated here. The joint averaging method can be used to combine parameter updates from a plurality of vehicles to create a global model that captures different conditions and driving behaviors. Optionally, the generalization module 730 may further comprise a model repository that stores and manages multiple versions of the model, and may optionally be indexed by region, driving conditions, and user preferences to ensure that the correct model is distributed back to the corresponding vehicle. Optionally, the generalization module 730 may further comprise an update scheduler that manages an adaptive synchronization plan, sends personalized updates to individual vehicles, and distributes the general model across the entire fleet. The cloud distributes updates based on major improvements detected in usage patterns or the global model.

One or more examples of the system 700 introduce a cloud-vehicle collaboration framework that continuously improves the Al model through incremental learning and real-time user feedback, thereby providing individual users with personalized performance. Cloud-based joint learning for generalization aggregates updates between vehicles without sharing the raw training data used by each vehicle to train its own onboard Al model, ensuring effective model generalization across different driving environments while protecting privacy. The onboard Al model is optimized in real time to optimize driver assistance and autonomous driving functions, and only the model parameters such as model gradients and metadata of the anonymized Al model for each vehicle are available. Transmission to the cloud reduces bandwidth usage. Adaptive synchronization triggers updates only when meaningful improvements occur, and vehicles reliably operate using the local model during connectivity loss, restoring seamless synchronization once connectivity is restored. This design can be scaled to thousands of vehicles, supporting continuous adaptation and efficient cloud-edge collaboration.

As such, one or more examples of the system 700 address the limitation of existing vehicle AI systems lacking a user feedback-based reinforcement learning mechanism, innovatively addressing the need for a user-centric approach and ensuring continuous and incremental learning of the AI model on the vehicle. This provides a better user experience. In addition, one or more examples of the system 700 utilize connected car cloud resources to aggregate insights, centrally improve the model, and integrate user-specific improvements to iteratively update the vehicle's AI model. This is achieved by utilizing a federated learning framework, which enables effective collaboration between onboard Al models, the cloud, and user feedback.

In summary, one or more examples of the system 700 innovatively introduce a personalized AI system that integrates the vehicle and the cloud based on Al-based ADAS and cloud-connected vehicle trends. The incremental Al model in the vehicle not only promotes personalized decision-making by actively participating in user feedback, but further involves cloud-based infrastructure for aggregation and continuous model updates, achieving significant technical results.

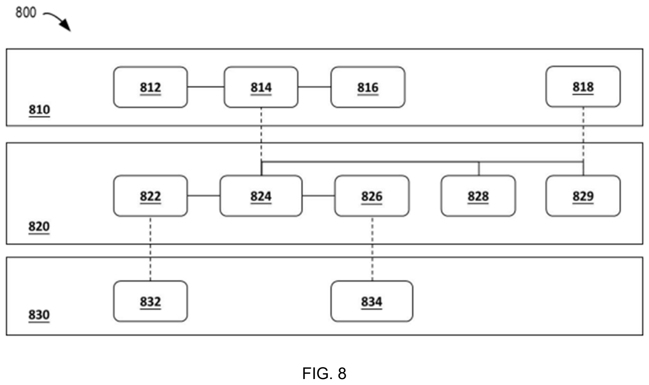

FIG. 8 shows a logical architecture block diagram of a system 800 for the personalization and generalization of an AI model for vehicle driving according to some examples of the present disclosure. The system 800 comprises a software layer 810, a hardware layer 820, and an environmental layer 830. Optionally, the software layer 810 comprises an inference model module 812, an onboard model module 814, and a model update module 816, and additionally further comprises a cloud registration center 818. The inference model module 812 may comprise a variety of inference models, and the onboard model module 814 may be an Al model. The hardware layer 820 comprises a vehicle sensor 822, a computing unit 824, and an actuator 826. Additionally, it further comprises a memory 828 and a network unit 829 for communicating with the cloud registration center module 818. Optionally, a cellular or 5G network may be used to upload and download AI models between vehicles and the cloud. The onboard model 814 may utilize vehicle sensors 822 to collect information data of the vehicle itself and the open environment 832. Based on the information data, the computing unit 824 performs model calculations, training, and driving strategy generation, stores the relevant data in the memory 828, and communicates with the cloud registration center 818 through the network unit 829 to upload the updated Al model in the model update module 816 or download the aggregated AI model. Optionally, the onboard model 814 operates locally in the vehicle and makes predictions for real-time operations (e.g., lane detection and adaptive cruise control). The environmental layer 830, in turn, comprises the open environment in which the vehicle is located, where the user 834, as the driver, performs driving operations such as taking over the vehicle through the actuator 826. Optionally, user takeover and other feedback data can be used as training samples for the onboard model 814. The software layer 810, the hardware layer 820, and the environmental layer 830 in the system 800 work together to achieve effective collaboration between the onboard AI model, the cloud, and user feedback.

In the system 800, vehicles equipped with adaptive cruise control and lane keep systems can continuously personalize their behavior based on user feedback. A vehicle often drives on busy urban roads. The onboard model 814 learns the user's tendency to change lanes and adjust speed limits based on specific traffic conditions. The vehicle periodically sends incremental model updates to the cloud, and the global
model is updated by aggregation based on feedback from many other vehicles. The cloud then distributes an aggregated and updated general model that incorporates insights from urban and highway driving scenarios to ensure optimal performance in different environments. When a vehicle receives a new model, it uses recent user feedback to fine-tune it locally, achieving a balance between personalization and universality.

In summary, the system 800 can personalize the onboard model through incremental learning. Optionally, the onboard model 814 continually fine-tunes using real-time sensor data and user feedback. For example, if the driver frequently overtakes the lane keep system, the onboard model 814 will make adjustments to reduce unnecessary corrections in similar situations. The incremental learning module (not shown) in the system 800 may apply partial weight updates based on feedback to enable the system 800 to improve performance without requiring a complete retraining. Optionally, the system 800 may periodically transmit model updates to the cloud, and the vehicle may record learning progress and periodically send model updates and metadata (e.g., gradients and accuracy metrics) to the cloud for aggregation. The system 800 can send updates to the cloud via a transport protocol (e.g., MQTT or HTTPS) while ensuring reliable and secure communications. Metadata comprises model ID and version, improvement indicators (e.g., error reduction after learning), geographic or environmental context (e.g., cities, highways), etc. Optionally, the system 800 may aggregate the uploaded onboard models in the cloud. Optionally, the cloud aggregator (not shown) of the system 800 collects updates from many vehicles operating in different regions or under different conditions. Optionally, the system 800 performs a joint averaging to combine parameters from a plurality of vehicles while protecting the data privacy of each vehicle. The system ensures that only model weights or gradients are shared with the cloud and that no raw data (such as GPS data or video sources) is uploaded out of the vehicle to the cloud. Optionally, the system 800 may also distribute the aggregated general model to the vehicles. Optionally, the system 800 creates a general Al model in the cloud that can capture patterns in different environments and driving behaviors. Optionally, the vehicle may receive updates periodically as part of routine updates or the vehicle may also receive updates as needed, for example, when the local model of the vehicle reaches a performance threshold that requires a new global model. In addition, in terms of safety, the vehicle uses dynamic planning based on network availability and model improvement events synchronized with the cloud. To ensure safety, if cloud connectivity is temporarily unavailable, the vehicle will continue to operate independently using the onboard model to ensure system reliability. Once the connection is restored, the vehicle will synchronize with the cloud and update its local onboard model based on the latest version of the aggregated model.

In summary, one or more examples of the system 800 utilize modular components to enhance collaboration between modules and a user-centric Al ecosystem. By utilizing onboard AI models, employing end-to-end deep neural networks for real-time decision-making, and leveraging federated learning across users on cloud-based infrastructure, efficient model aggregation is achieved, thereby enabling seamless integration of onboard incremental AI, cloud-based infrastructure, and dynamic user takeover, as well as personalized AI model updates for vehicles. Additionally, the system 800 provides a vehicle cloud collaboration framework with incremental learning, federated learning, and adaptive synchronization. The system 800 focuses on improving how user feedback drives personalization and how federated learning aggregates knowledge between vehicles to create scalable, privacy-preserving, and powerful AI models. Furthermore, the system 800 ensures continuous improvement while maintaining reliable operation even in the event of a network outage.

As such, one or more examples of the system 800 address the limitation of existing vehicle AI systems lacking user feedback-based reinforcement, innovatively addressing the need for a user-centric approach and ensuring continuous and incremental learning of the AI model on the vehicle. This provides a better user experience. In addition, one or more examples of the system 800 utilize connected car cloud resources to aggregate insights, centrally improve the model, and integrate user-specific improvements to iteratively update the vehicle's AI model. This is achieved by utilizing a federated learning framework, which enables effective collaboration between onboard AI models, the cloud, and user feedback.

In summary, one or more examples of the system 800 innovatively introduce a personalized AI system that integrates the vehicle and the cloud based on Al-based ADAS and cloud-connected vehicle trends. The incremental Al model in the vehicle not only promotes personalized decision-making by actively participating in user feedback, but further involves cloud-based infrastructure for aggregation and continuous model updates, achieving significant technical results.

The present disclosure further provides an electronic device for driving a vehicle. The electronic device comprises a processor and a memory coupled to the processor. The memory has instructions stored therein that cause the processor to execute the reinforcement learning method for the Al model of the vehicle. The method comprises acquiring a training sample, wherein the training sample is generated based on user feedback data of the vehicle itself, the user feedback data indicating the user's driving feedback, and the user feedback data comprises at least one of the vehicle's state information when driven by the user and information of the vehicle's surrounding environment. The method further comprises updating the Al model through reinforcement learning based on the training sample. Furthermore, the method further comprises uploading the Al model updated through reinforcement learning to a cloud-based server to generate an aggregated AI model, wherein the aggregated Al model can be used for vehicle driving.

In some examples, the method further comprises detecting the user's driving actions. The method further comprises, in response to detecting the user's takeover driving action on the vehicle, acquiring the state information of the user's takeover driving action. Furthermore, the method further comprises generating a training sample based on state information. The takeover driving action is the user's decision based on at least one of their preferences regarding the vehicle's driving condition, their own comfort, or the overall driving experience.

In some examples, the state information comprises the state information of the vehicle's driving action actuators and/or information of the vehicle's surrounding environment. In addition, the aggregation is based on at least one aggregation algorithm among random forest, model ensemble, or probabilistic ensemble. Furthermore, uploading an Al model to a cloud-based server comprises anonymizing the Al model, as well as uploading the anonymized AI model to the cloud-based server.

In some examples, the method further comprises deploying an initial incremental learning AI model in the vehicle, wherein the Al model is capable of being updated through incremental learning. The method further comprises initializing the incremental learning AI model using basic parameters. The initialized Al model is capable of generating a driving strategy for the vehicle based on state information features extracted from the state information.

In some examples, the method further comprises acquiring an aggregated Al model from a cloud-based server. The method further comprises replacing the original Al model of the vehicle with the aggregated AI model and generating driving strategies based on the aggregated AI model. Furthermore, the aggregated Al model is formed by aggregating the AI models of a plurality of vehicles.

In some examples, the vehicle and the server communicate via cellular or 5G networks. The aggregated Al model replaces the vehicle's original Al model, including detecting the vehicle's driving state and, in response to the vehicle's driving state being in a long-term stationary state, replacing the vehicle's original AI model with the aggregated Al model.

The present disclosure further provides an Al model aggregation electronic device for vehicle driving. The electronic device comprises a processor and a memory coupled to the processor. The memory has instructions stored therein that cause the processor to execute a method for vehicle driving. The method comprises acquiring a plurality of incrementally learned and updated Al models from a plurality of vehicles. Optionally, the Al models may be anonymized. Optionally, the Al model updated through incremental learning can be an AI model obtained according to one or more examples of the incremental learning method for a vehicle artificial intelligence (AI) model described above. The method further comprises aggregating a plurality of AI models updated through incremental learning based on an AI model aggregation algorithm. The method further comprises generating an aggregated AI model. Furthermore, the method further comprises distributing the aggregated Al model to at least one vehicle. The AI model aggregation algorithm comprises at least one of random forest, model ensemble, or probabilistic ensemble.

As such, one or more examples of the above electronic device for vehicle driving and the above AI model aggregation electronic device address the limitation of existing vehicle AI systems lacking a user feedback-based incremental learning mechanism, innovatively addressing the need for a user-centric approach and ensuring continuous and incremental learning of the Al model on the vehicle. This provides a better user experience. In addition, one or more examples of these electronic devices utilize connected car cloud resources to aggregate insights, centrally improve the model, and integrate user-specific improvements to iteratively update the vehicle's AI model. This is achieved by utilizing a federated learning framework, which enables effective collaboration between onboard Al models, the cloud, and user feedback.

In summary, one or more examples of these electronic devices innovatively introduce a personalized AI system that integrates the vehicle and the cloud based on Al-based ADAS and cloud-connected vehicle trends. The incremental Al model in the vehicle not only promotes personalized decision-making by actively participating in user feedback, but further involves cloud-based infrastructure for aggregation and continuous model updates, achieving significant technical results.

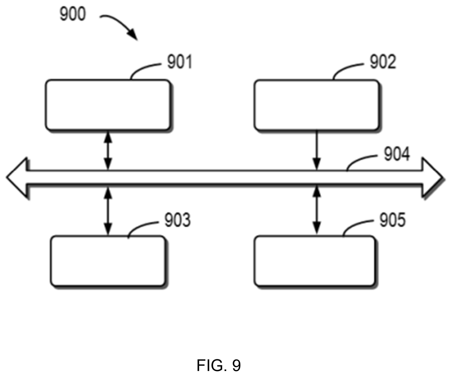

FIG. 9 shows a schematic block diagram of a controller 900 that can be used to implement a plurality of examples of the present disclosure. As shown in the figure, the electronic device 900 comprises a processor 901, which can perform various appropriate actions and processes according to computer program instructions stored in a read only memory (ROM) 902 and loaded into a random access memory (RAM) 903. Various programs and data required for the operation of the electronic device 900 may also be stored in the RAM 903. The processor 901, the ROM 902, and the RAM 903 are interconnected through a bus 904. An input/output (I/O) interface 905 is also connected to the bus 904.

The processor 901 can be various general-purpose and/or special-purpose processing components with processing and computing capabilities. Some examples of the processor 901 comprise, but are not limited to, central processing units (CPUs), graphics processing units (GPUs), a variety of dedicated artificial intelligence (AI) computing chips, various computing units that run machine learning model algorithms, digital signal processors (DSPs), and any suitable processors, controllers, microcontrollers, etc. The processor 901 performs various methods and processes described above, such as the method 200. For example, in some examples, the method 200 can be implemented as a computer software program tangibly contained in a machine-readable medium. In some examples, portions or all of the computer program can be loaded and/or installed onto the electronic device 900 via the ROM 902. When the computer program is loaded into the RAM 903 and executed by the processor 901, one or more steps of the method 200 described above can be performed. Alternatively, in other examples, the processor 901 can be configured to perform method 200 by any other suitable means (e.g., by means of firmware).

The functions described above herein may be performed at least partially by one or more hardware logic components. For example, without limitation, demonstration types of hardware logic components that may be used comprise: field programmable gate array (FPGA), application specific integrated circuit (ASIC), application specific standard product (ASSP), system on chip system (SOC), loading programmable logic device (CPLD), etc.

The program code used to implement the method of the present disclosure may be written using any combination of one or more programming languages. These program codes may be provided to a processor or controller of a general purpose computer, a special purpose computing machine or other programmable data processing devices, such that the program code, when executed by the processor or controller, causes the functions/operations specified in the flowchart and/or block diagram to be implemented. The program codes may be executed entirely on a machine, partially on the machine, partially on the machine as a standalone software package, and partially on a remote machine, or wholly on the remote machine or server.

In the context of the present disclosure, a machine-readable medium can be a tangible medium that can contain or store programs for use by or in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, device, or apparatus, or any suitable combination described above. More specific examples of the machine-readable storage medium would comprise electrical connections based on one or more wires, portable computer disks, hard disks, random access memory (RAM), read-only memory (ROM), erasable programmable read-only memory (EPROM or flash memory), optical fibers, portable compact disc read-only memory (CD-ROM), optical storage devices, magnetic storage devices, or any suitable combination of the foregoing. Further, although various operations are depicted in a particular order, this should be understood as requiring that such operations be performed in the particular order shown or in the order shown, or that all of the illustrated operations should be performed to achieve the desired result. In certain contexts, multitasking and parallel processing may be advantageous. Likewise, although several specific implementation details are included in the above discussion, these should not be construed as limiting the scope of the present disclosure. Some features described in the context of separate examples may also be implemented in a single implementation in combination. Conversely, various features described in a single implemented context may also be implemented in a plurality of implementations individually or in any suitable sub-combination.

Although the present subject matter has been described in languages that are specific to structural features and/or method logical actions, it should be understood that the subject matter defined in the appended claims is not necessarily limited to the particular features or actions described above. Rather, the particular features and actions described above are merely example forms of implementing the claims.

The above description of the various embodiments of the present disclosure is exemplary and not intended to be exhaustive or limited to the disclosed embodiments. Many modifications and variations will be apparent to those of ordinary skill in the art without departing from the scope and spirit of the described embodiments. The selection of terms used in this text aims to best explain the principles and actual application of the various examples, the technological improvements in the market, or allow others skilled in the art to understand the various examples disclosed in this text.

## Claims

1. An incremental learning method (200) for a vehicle artificial intelligence (AI) model,
comprising:
acquiring (210) a training sample, wherein the training sample is generated based on user feedback data from the vehicle itself indicating the user's driving feedback;
updating the Al model of the vehicle through incremental learning (220) based on the training sample; and
uploading (230) the AI model updated through incremental learning to a cloud-based server to generate an aggregated AI model, wherein the aggregated Al model can be used for vehicle driving.

2. The method (200) according to Claim 1, the method further comprising:
detecting the user's driving actions;
in response to detecting the user's takeover driving action on the vehicle, acquiring state information of the user's takeover driving action;
generating the training sample based on the state information.

3. The method (200) according to Claim 2, wherein the state information comprises state information of the driving action actuator of the vehicle and/or information of the vehicle's surrounding environment.

4. The method (200) according to Claim 2, the method further comprising:
deploying the initial AI model in the vehicle, wherein the Al model is capable of being updated through incremental learning;
initializing the AI model using basic parameters,
wherein the initialized AI model is capable of generating a driving strategy for the vehicle based on state information features extracted from the state information.

5. The method (200) according to Claim 1, wherein uploading (230) the Al model updated through incremental learning to a cloud-based server to generate an aggregated AI model comprises:
anonymizing the Al model; and
uploading the anonymized AI model to the cloud-based server.

6. .The method (200) according to Claim 1 or 5, the method further comprising: acquiring
the aggregated AI model from the cloud-based server;
replacing the original AI model of the vehicle with the aggregated Al model; and
generating a driving strategy for the vehicle based on the replaced Al model.

7. The method (200) according to Claim 6, wherein the aggregated Al model is based on the aggregation of Al models from a plurality of vehicles.

8. The method (200) according to Claim 5, wherein uploading the anonymized AI model to a cloud-based server comprises uploading the model gradients and metadata of the Al model.

9. The method (200) according to Claim 2, wherein the takeover driving action is performed by the user based on at least one of their preferences regarding the vehicle's driving conditions, their own comfort, or the overall driving experience.

10. The method (200) according to Claim 6, wherein replacing the original AI model of the vehicle with the aggregated Al model comprises:
detecting the driving state of the vehicle; and
in response to the driving state of the vehicle being in a long-term stationary state, replacing the original AI model of the vehicle with the aggregated Al model.

11. The method (200) according to Claim 1, wherein the cloud is a connected car cloud, and the aggregated Al model being used for driving the vehicle comprises downloading the aggregated AI model to at least one vehicle for driving the at least one vehicle, and the at least one vehicle comprises the vehicle or other vehicles belonging to the same connected car cloud as the vehicle.

12. An artificial intelligence (AI) model aggregation method (600) for vehicle driving, the method comprising:
acquiring (610) a plurality of the AI models from a plurality of the vehicles, wherein the Al models are Al models updated through incremental learning;
aggregating (620) the plurality of AI models based on an Al model aggregation algorithm and generating the aggregated AI model; and
distributing (630) the aggregated Al model to at least one of the vehicles.

13. The method (600) according to Claim 12, wherein the Al model has been anonymized, and the anonymized Al model comprises model gradients and metadata of the AI model.

14. .The method according to Claim 12(600), wherein the Al model updated through incremental learning is an AI model acquired by the method according to any one of Claims 1-11.

15. . An electronic device (900)for incremental learning of a vehicle artificial intelligence (AI) model, comprising:
a processor; and
a memory coupled with the processor, the memory having instructions stored therein, the instructions, when executed by the processor, causing the device to perform actions, the actions comprising:
acquiring a training sample, wherein the training sample is generated based on user feedback data from the vehicle itself, the user feedback data indicating the user's driving feedback, and the user feedback data comprising at least one of the vehicle's state information when driven by the user and information of the vehicle's surrounding environment;
updating the Al model through incremental learning based on the training sample; and
uploading the Al model updated through incremental learning to a cloud-based server to generate an aggregated Al model, wherein the aggregated Al model can be used for vehicle driving.

16. A vehicle, comprising an electronic device configured to perform the method according to any one of Claims 1-11.

17. A computer program product, the computer program product comprising machine-executable instructions, the machine-executable instructions, when executed, causing a machine to implement the method according to any one of Claims 1-12.
